# EUROPÄISCHE PATENTANMELDUNG

(11) **EP 2 425 887 A1**
(43) Veröffentlichungstag der Anmeldung: **07.03.2012**
(21) Anmeldenummer: 10175226.9
(22) Anmeldetag: 03.09.2010
(51) Int. Cl.: B01D 53/14, F24J 2/00, F24J 3/08, F28D 20/00

(54) **Fossilbefeuerte Kraftwerksanlage mit Abscheideeinrichtung für Kohlendioxid und Verfahren zum Abtrennen von Kohlendioxid aus einem Abgas einer fossilbefeuerten Kraftwerksanlage**

(71) Anmelder: Siemens Aktiengesellschaft, 80333 München (DE)
(72) Erfinder: Kremer, Hermann, 91052, Erlangen (DE); Vortmeyer, Nicolas, 91054, Erlangen (DE)

(57) **Zusammenfassung**

Fossilbefeuerte Kraftwerksanlage mit Abscheideeinrichtung für Kohlendioxid und Verfahren zum Abtrennen von Kohlendioxid aus einem Abgas einer fossilbefeuerten Kraftwerksanlage

Die Erfindung betrifft eine fossilbefeuerte Kraftwerksanlage (1) mit einer einer Verbrennungsvorrichtung nachgeschalteten und von einem kohlendioxidhaltigen Abgas durchströmbaren Abscheidevorrichtung (2) für Kohlendioxid. Die Abscheidevorrichtung (2) umfasst eine Absorptionseinheit (3) und eine Desorptionseinheit (3). Die Desorptionseinheit ist erfindungsgemäß mit einer erneuerbaren Energiequelle (5) verbunden.

## Beschreibung

Fossilbefeuerte Kraftwerksanlage mit Abscheideeinrichtung für Kohlendioxid und Verfahren zum Abtrennen von Kohlendioxid aus einem Abgas einer fossilbefeuerten Kraftwerksanlage

Die Erfindung betrifft eine fossilbefeuerte Kraftwerksanlage mit einer Verbrennungsvorrichtung und einer Abscheideeinrichtung für Kohlendioxid, insbesondere einer Abscheideeinrichtung für Kohlendioxid bestehend aus einer Absorptionseinheit und einer Desorptionseinheit. Die Erfindung betrifft außerdem ein Verfahren zum Abtrennen von Kohlendioxid aus einem Abgas einer fossilbefeuerten Kraftwerksanlage.

Bei fossilbefeuerten Kraftwerksanlagen befinden sich zurzeit eine Reihe an Verfahren zum Abtrennen von Kohlendioxid aus dem Abgas der Kraftwerksanlage in der Entwicklung und Erprobung. Dabei kommen Waschverfahren zum Einsatz, bei denen vor der Verbrennung (Pre-Combustion) oder nach der Verbrennung (Post-Combustion) durch chemische oder physikalische Absorption Kohlendioxid aus dem Abgas abgetrennt wird. Bei dem Post-Combustion-Verfahren wird Kohlendioxid in Absorptionskolonnen durch ein Waschmittel absorbiert, welches in einer der Absorptionskolonne nachgeschalteten Desorptionskolonne unter Freisetzung von Kohlendioxid wieder regeneriert wird. Das regenerierte Waschmittel wird von der Desorptionskolonne anschließend über entsprechende Gegenstromwärmetauscher wieder zurück zur Absorptionskolonne geleitet und somit im Kreislauf geführt. Für den Desorptionsprozess wird zur Regenerierung des Waschmittels eine große Menge an Wärmeenergie benötigt, welche der Desorptionskolonne über Sumpfverdampfer und über Wärmetauscher in Seitenabzügen der Desorptionskolonne zugeführt wird.

Das Hauptproblem bei den existierenden Verfahren zum Abtrennen von Kohlendioxid aus einem Abgas ist insbesondere der sehr hohe Energieaufwand, der in Form von Heizenergie für die Desorption benötigt wird. Im Stand der Technik sind dazu bislang keine brauchbaren Verbesserungen zu finden, die den Energieaufwand einer in einen Kraftwerksprozess integrierten Abscheidevorrichtung zur Abtrennung von Kohlendioxid in ausreichendem Maße reduziert.

Bislang wird die notwendige Wärmeenergie in Form von Heizdampf dem Kraftwerksprozess entzogen. Bei fossilen Kraftwerksprozessen wird derzeit ein großer Teil des Niederdruckdampfes der Dampfturbine, in der Regel zwischen 30 und 70 %, zur Regenerierung des Waschmittels eingesetzt, was den Gesamtwirkungsgrad der Kraftwerksanlage um 4 bis 7 % reduziert. Bei entsprechender Nachrüstung einer bestehenden Kraftwerksanlage mit einer Kohlendioxid-Abscheidevorrichtung führt dies zudem zu erheblichen Umbauten an den Dampf- und Wasserkreisläufen sowie an den Dampfturbinen und damit zu erheblichen Investitionen.

Genereller Nachteil an Kohlendioxid-Abscheidevorrichtungen, die aus dem Stand der Technik bekannt sind, ist insbesondere der sehr hohe Energieaufwand. Weiterhin verursacht die Dampfauskopplung aus der Kraftwerksanlage erhebliche zusätzliche Investitionen und erschwert den Betrieb der Kraftwerkanlage in den unterschiedlichen Betriebszuständen. Ein weiterer Nachteil tritt insbesondere in der Hochfahrphase der Kraftwerksanlage zutage. Der Prozessdampf zur Regenerierung des Waschmittels kann erst dann zur Verfügung gestellt werden, wenn die Kraftwerksanlage ausreichend Prozessdampf erzeugt. Es dauert damit länger die Abscheideanlage in einen stabilen Abscheidebetrieb zu überführen und somit wird mehr Kohlendioxid ungereinigt in die Atmosphäre entlassen.

Eine Aufgabe der Erfindung besteht daher darin, eine fossilbefeuerte Kraftwerksanlage vorzuschlagen, die trotz angeschlossener Kohlendioxid-Abscheidevorrichtung einen hohen Wirkungsgrad erzielt, und in der bei den unterschiedlichen Betriebszuständen die Abtrennanlage schneller in einen stabilen Abscheidebetrieb überführt werden kann, selbst wenn noch kein ausreichender Prozessdampf zur Verfügung steht. Damit werden zusätzlich Kohlendioxidemissionen verhindert. Eine weitere Aufgabe der Erfindung ist es, ein Verfahren zum Abtrennen von Kohlendioxid aus einem Abgas einer fossilbefeuerte Kraftwerksanlage anzugeben, das einen hohen Wirkungsgrad gewährleistet, und in der bei den unterschiedlichen Betriebszuständen die Abtrennanlage schneller in einen stabilen Abscheidebetrieb überführt werden kann, um damit zusätzlich Kohlendioxidemissionen zu verhindern.

Die auf eine Vorrichtung gerichtete Aufgabe ist erfindungsgemäß gelöst mit einer fossilbefeuerten Kraftwerksanlage mit einer einer Verbrennungsvorrichtung nachgeschalteten und von einem kohlendioxidhaltigen Abgas durchströmbaren Abscheidevorrichtung für Kohlendioxid, wobei die Abscheidevorrichtung eine Absorptionseinheit und eine Desorptionseinheit aufweist, wobei zur Bereitstellung von Desorptionsenergie die Desorptionseinheit für eine Einkopplung von Wärmeenergie mit einer erneuerbaren Energiequelle verbunden ist.

Der Erfindung liegt dabei die Idee zugrunde, die für die Abscheidevorrichtung benötigte Wärmeenergie anstatt über die Kraftwerksanlage über eine unkonventionelle erneuerbare Energiequelle bereitzustellen. Dies ist möglich, da zur Regenerierung von Kohlendioxid lediglich Niedertemperaturwärme benötigt wird, die idealerweise durch regenerative Energiequellen bereitgestellt werden kann. Somit ist es möglich, die fossilbefeuerte Kraftwerksanlage ohne wesentliche Wirkungsgradeinbußen zur Erzeugung von Strom zu betreiben. Bei separatem Betrieb einer fossilbefeuerten Kraftwerksanlage mit Abscheideeinrichtung und der Bereiststellung der notwendigen Wärmemenge zur Regeneration des Waschmittels über erneuerbare Energiequellen ergibt sich in Summe eine vorteilhaftere Kohlendioxidbilanz. Von Vorteil ist dabei insbesondere, dass die Kraftwerksanlage ohne wesentliche Wirkungsgradeinbußen einen fossilen Brennstoff auf höchstem technischem Wirkungsgradniveau verstromen kann. Außerdem erreicht die Abtrennanlage bei den unterschiedlichen Lastzuständen schneller eine stabile Betriebsweise. Durch eine mit erneuerbaren Energien betriebene Abscheidevorrichtung, die in einer Kraftwerksanlage integriert ist, sind deutlich geringere Betriebskosten zu erwarten. Dabei ist der Investitionsbetrag zur Erzeugung der erneuerbaren Energie näherungsweise der gleiche bei Bereitstellung von Prozessdampf über die fossilbefeuerte Kraftwerksanlage.

Vorteilhaft wird die erneuerbare Energie durch eine Solar-Thermie-Anlage bereitgestellt. Die Solar-Thermie-Anlage besteht dabei vorzugsweise aus einem Solarfeld, welches aus einzelnen Parabolrinnenkollektoren besteht, oder auch in Form eines Solar-Turmkraftwerks ausgestaltet sein kann. Durch das Solarfeld wird Dampf erzeugt, welcher in Form von Wärmeenergie der Desorptionseinheit zur Regenerierung von Waschmittel bereitgestellt wird.

Ebenso vorteilhaft kann eine Geo-Thermie-Anlage zur Erzeugung von Wärmeenergie für die Abscheidevorrichtung genutzt werden. Eine Geo-Thermie-Anlage kann dabei auch in Regionen zum Einsatz kommen, in denen ggf. keine ausreichende Sonneneinstrahlung für eine Solar-Thermie-Anlage vorhanden ist, jedoch geothermische Wärme aus dem Erdreich gewonnen werden kann. Der Vorteil einer Geo-Thermie-Anlage liegt insbesondere auch bei der ununterbrochenen Verfügbarkeit der Wärme.

In einer anderen vorteilhaften Ausgestaltung der fossilbefeuerte Kraftwerksanlage ist die erneuerbare Energiequelle eine Biogas- und/oder Biomasse-Verbrennungsanlage. Derartige Biogas-, Biomasse-Verbrennungsanlagen zählen zu den erneuerbaren Energiequellen. Der Einsatz von Biogas-, Biomasse-Verbrennungsanlagen zur Erzeugung von Wärme für die Abscheidevorrichtung ist an Standorten von Kraftwerksanlagen denkbar, an denen der Einsatz von Solar-Thermie-Anlagen oder Geo-Thermie-Anlagen aufgrund der geologischen Lage energetisch ungünstig ist.

Bei einer vorteilhaften Weiterbildung der fossilbefeuerte Kraftwerksanlage ist zwischen die Desorptionseinheit und die erneuerbare Energiequelle ein Wärmespeicher geschaltet. Der Wärmespeicher ist dabei derart ausgestaltet, dass mögliche überschüssige Wärmeenergie, die z.B. tagsüber anfällt, zwischengespeichert werden kann, so dass die Abscheidevorrichtung für Kohlendioxid auch mit Wärmeenergie versorgt werden kann, wenn die erneuerbare Energiequelle zeitweise keine Wärmeenergie teilweise oder vollständig zur Verfügung stellen kann. Dies ist bei Solar-Thermie-Anlagen außerhalb der Sonneinstrahlungszeit der Fall. Durch den Wärmespeicher ist somit sichergestellt, dass die Abscheidevorrichtung für Kohlendioxid in einem weitgehenden Maße mit einer konstanten Wärmeenergie betrieben werden kann.

Ebenso können Speichereinheiten (Lagertanks) in den Waschmittelkreislauf, für das beladene und das regenerierte Waschmittel, eingebunden werden, um flexibler auf Laständerungen zu reagieren und Betriebszustände in denen nicht genügend Wärmeenergie zur Desorption bereitgestellt werden kann zu überbrücken (hier nicht dargestellt).

Bei einer weiteren bevorzugten Ausgestaltung kann die Desorptionseinheit über einen weiteren nach- oder parallel- geschalteten Wärmeaustauscher Wärmeenergie aus der Dampfturbineneinheit der fossilbefeuerten Kraftwerksanlage beziehen, so dass der Desorptionseinheit bei unzureichender Wärmeenergieversorgung durch die erneuerbare Energiequelle, Wärmeenergie aus der Dampfturbineneinheit zuregelbar ist. Für die Steuerung der Wärmezufuhr sind entsprechende Regeleinrichtungen vorgesehen. Durch diese Maßnahme ist somit sichergestellt, dass auch bei einer ganzen oder teilweisen Unterversorgung an Wärmeenergie über die erneuerbare Energiequelle, Wärmeenergie in Form von Prozessdampf aus dem Kraftwerksprozess für die Desorption von Kohlendioxid verwendet werden kann. Die Betriebssicherheit der Abscheideeinrichtung für Kohlendioxid ist somit erhöht.

In einer vorteilhaften Weiterentwicklung sind in den Waschmittelkreislauf der Abscheidevorrichtung ein oder mehrer Absorptionsmittelspeicher integriert. Die Absorptionsmittelspeicher sind Behälter, die Absorptionsmittel zeitweise speichern können. Vorteilhaft sind diese Behälter in der Absorptionsmittelleitung von der Absorptionseinheit zur Desorptionseinheit angeordnet, da dadurch beladenes Absorptionsmittel zwischengespeichert werden kann. Dadurch können Betriebszustände überbrückt werden, in denen nicht genügend Wärmeenergie zur Desorption verfügbar ist.

Die auf ein Verfahren gerichtete Aufgabe der Erfindung wird gelöst durch ein Verfahren zum Abtrennen von Kohlendioxid aus einem Abgas einer fossilbefeuerten Kraftwerksanlage, bestehend aus einem Absorptionsprozess und einem Desorptionsprozess, bei dem die für den Desorptionsprozess erforderliche Wärmeenergie zumindest teilweise mittels erneuerbarer Energien bereitgestellt wird.

Erfindungsgemäß wird dabei die Energie, die zum Abtrennen von Kohlendioxid erforderlich ist, anstatt aus der fossilbefeuerten Kraftwerksanlage durch erneuerbare Energien bereitgestellt.

Dies ist möglich, da zur Regenerierung des Lösungsmittels von Kohlendioxid Wärme auf einem verhältnismäßig niedrigen Niveau ausreicht. Diese Wärme kann idealerweise durch regenerative Energiequellen bereitgestellt werden. Dadurch kann die fossilbefeuerte Kraftwerksanlage ohne wesentliche Wirkungsgradeinbußen betrieben werden und Strom erzeugen.

Außerdem wird bei den unterschiedlichen Betriebszuständen die Abtrennanlage schneller in einen stabilen Abscheidebetrieb überführt, selbst wenn noch kein ausreichender Prozessdampf zur Verfügung steht, und damit zusätzlich Kohlendioxidemissionen verhindert.

In einer vorteilhaften Ausgestaltung des Verfahrens zum Abtrennen von Kohlendioxid wird die Wärmeenergie für den Desorptionsprozess solar-thermisch erzeugt, und auf ein Wärmetauschermedium übertragen.

Bei einer weiteren vorteilhaften Ausgestaltung des Verfahrens zum Abtrennen von Kohlendioxid wird die Wärme für den Desorptionsprozess geo-thermisch erzeugt, und auf ein Wärmetauschermedium übertragen. Die Nutzung von Geo-Thermie hat gegenüber von Solar-Thermie den Vorteil, dass die Wärmeenergie weitgehend konstant zur Verfügung steht.

Weiterhin vorteilhaft ausgestaltet ist das Verfahren zum Abrennen von Kohlendioxid dadurch, dass die Wärmeenergie für den Desorptionsprozess durch Verbrennung von Biogas- und/oder Biomasse erzeugt wird, und die Wärmeenergie auf ein Wärmetauschermedium übertragen wird. Auch ist die Kombination mehrerer verschiedenartiger regenerativer Energiequellen möglich. So ist z.B. zur Abdeckung des Grundbedarfs eine geo-thermische Versorgung, und/oder eine Versorgung durch die Verbrennung von Biogas- und/oder Biomasse vorgesehen, und zur Abdeckung von Bedarfsspitzen zusätzlich eine Solar-Thermie-Anlage.

In einer vorteilhaften Weiterbildung des Verfahrens zum Abtrennen von Kohlendioxid wird die erneuerbar erzeugte Wärmeenergie vor einer Einkopplung in den Desorptionsprozess zwischengespeichert. Besonders vorteilhaft ist es, wenn eine vollständige oder teilweise Unterversorgung des Desorptionsprozesses von erneuerbarer Wärmeenergie durch einen Regelprozess ausgeglichen wird, indem die Unterversorgung durch Dampf aus dem Dampfturbinenprozess der fossilbefeuerten Kraftwerksanlage bereitgestellt wird.

Folgend wird die Erfindung anhand eines Ausführungsbeispiels durch eine schematische Zeichnung näher erläutert. Es zeigt:

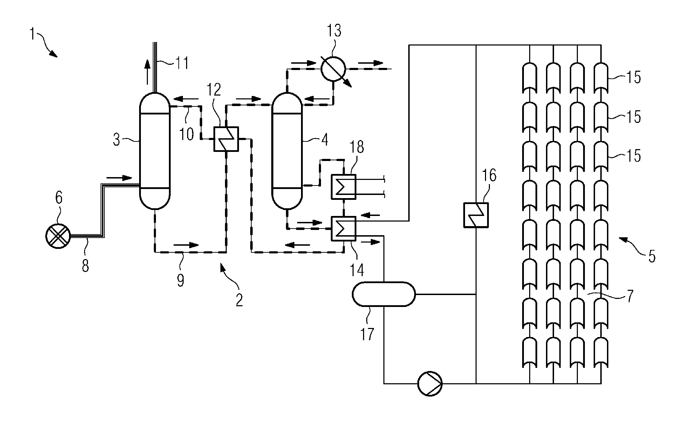

- FIG 1: ein Ausführungsbeispiel einer fossilbefeuerten Kraftwerksanlage mit einer Abscheidevorrichtung für Koh- lendioxid, die mit einer Solar-Thermie-Anlage verbunden ist.

Die in FIG 1 dargestellte fossilbefeuerte Kraftwerksanlage 1 besteht im Wesentlichen aus einer Verbrennungsvorrichtung 6, einer Abscheidevorrichtung für Kohlendioxid 2 und einer erneuerbaren Energiequelle 5. In dem Ausführungsbeispiel der Figur 1 ist die erneuerbare Energiequelle 5 ein Solarfeld 7.

Die Abscheidevorrichtung 2 für Kohlendioxid 2 umfasst im Wesentlichen eine Absorptionseinheit 3 und eine Desorptionseinheit 4. Die Absorptionseinheit 3 sowie die Desorptionseinheit 4 können aus einer oder mehreren Kolonnen bestehen. Die Verbrennungsvorrichtung 6 ist über eine Rauchgasleitung 8 mit der Absorptionseinheit 3 verbunden. Eine Zuführung des Rauchgases erfolgt dabei im unteren Bereich der Absorptionseinheit 3. Innerhalb der Absorptionseinheit 3 wird das Rauchgas mit einem Lösungsmittel in Kontakt gebracht, wobei Kohlendioxid von dem Lösungsmittel aufgenommen wird. Die Absorptionseinheit verlässt ein weitgehend von Kohlendioxid befreites Rauchgas, welches durch den Rauchgasauslass 11 aus der Absorptionseinheit 3 ausgeleitet wird.

Zur Ausleitung von beladenem Lösungsmittel ist die Absorptionseinheit 3 mit der Desorptionseinheit 4 durch eine Lösungsmittel-Zuleitung 9 verbunden. Die Ausleitung des beladenen Lösungsmittels erfolgt am Boden der Absorptionseinheit 3. Vorzugsweise im oberen Bereich der Absorptionseinheit 3 ist eine Lösungsmittel-Rückführleitung 10 angeschlossen, durch welche die Absorptionseinheit 3 zur Rückführung von regeneriertem Lösungsmittel mit der Desorptionseinheit 4 verbunden ist. In die Lösungsmittel-Zuleitung 9 und die Lösungsmittel-Rückführleitung 10 ist ein Kreuzstromwärmetauscher 12 geschaltet. Durch den Kreuzstromwärmetauscher 12 wird Wärme von dem regenerierten Lösungsmittel auf das beladene Lösungsmittel übertragen. Dies unterstützt einerseits den Desorptionsprozess, da das beladene Lösungsmittel bereits vorgewärmt ist und nun weniger Energie zum Austreiben des Kohlendioxids aufgewendet werden muss, und andererseits den Absorptionsprozess, da das abgekühlte regenerierte Lösungsmittel eine höhere Beladung an Kohlendioxid ermöglicht.

In der Desorptionseinheit 4 wird das beladene Lösungsmittel weiter erwärmt, wobei durch das so genannte auskochen Kohlendioxid freigesetzt wird. Die Desorptionseinheit 4 verlässt im oberen Bereich ein Brüden, ein Gas-Dampfgemisch aus Kohlendioxid und Dampf. In einem der Desorptionseinheit 4 nachgeschalteten Kondensator 13 wird durch Kondensation des Dampfes Kohlendioxid getrennt.

In dem in Figur 1 gezeigten Ausführungsbeispiel der Erfindung ist die Desorptionseinheit 4 beheizt durch einen Sumpfverdampfer 14. Der Sumpfverdampfer 14 ist ein Wärmetauscher, der Wärme aus einer Wärmequelle von seiner Primärseite auf das beladene Lösungsmittel an seiner Sekundärseite überträgt. Primärseitig ist der Sumpfverdampfer 14 verbunden mit einem Solarfeld 5. Nicht dargestellt sind hier andere regenerative Energiequellen wie eine Geo-Thermie-Anlage oder eine Biogas- und/oder Biomasseverbrennungsanlage. Nicht gezeigt ist hier eine zusätzliche Beheizung der Desorptionseinheit 4 durch einen Seitenverdampfer.

Das Solarfeld 5 umfasst eine Anzahl aus Sonnenkollektoren 15, z.B. Parabolrinnen, einen zu den Sonnenkollektoren 15 parallel geschalteten Wärmespeicher 16, und einen Druckbehälter 17. Die Anzahl der Sonnenkollektoren 15 ist anhand der vorhandenen durchschnittlichen Sonneneinstrahlung sowie der geforderten Wärmeleistung der Desorptionseinheit 4 zu dimensionieren. Der Wärmespeicher 16 dient zur Zwischenspeicherung von Wärmeenergie. Ist die Abscheidevorrichtung 2 nicht, oder nur teilweise in Betrieb, wird überschüssige Wärmeenergie durch den Wärmespeicher 16 gespeichert. Durch entsprechende Ventile und Steuerungen, die hier nicht näher dargestellt sind, ist es möglich ein in dem Solarfeld 5 zirkulierendes Wärmetauschermedium je nach Betriebsfall entweder nur durch die Sonnenkollektoren 15 und den Wärmespeicher 16 zu führen, oder durch die Sonnenkollektoren 15 und ganz oder teilweise durch die Desorptionseinheit 4. Nicht dargestellt sind auch notwendige Pumpen oder für die erneuerbare Energiequelle 5 notwenige Vorrichtungen.

Ebenso können Speichereinheiten in den Waschmittelkreislauf für das beladene und das regenerierte Waschmittel, eingebunden werden um flexibler auf Laständerungen zu reagieren und Betriebszustände in denen nicht genügend Wärmeenergie zur Desorption bereitgestellt werden kann zu überbrücken. Derartige Speichereinheiten sind in der Figur 1 nicht dargestellt.

Für den Betriebsfall, dass die Abscheidevorrichtung 2 mehr Wärmeenergie benötigt, als die erneuerbare Energiequelle 5 bereitstellen kann, ist ein zusätzlicher Wärmetauscher 18 in Form eines Sumpfverdampfers vorgesehen, über den zusätzlicher Heizdampf aus der Kraftwerksanlage in die Desorptionseinheit 4 eingebracht kann, so dass die Desorptionseinheit 4 auf einen optimalen Heizpunkt betrieben werden kann. Der Wärmetauscher 18 ist in der Figur 1 dem Sumpfverdampfer 14 nachgeschaltet. Alternativ wäre auch eine parallele Verschaltung denkbar, wird aber hier nicht gezeigt. Durch den Wärmetauscher 18 ist auch eine ausschließliche Beheizung der Desorptionseinheit 4 durch Prozessdampf aus dem Kraftwerksprozess im Sonderfall möglich. Für die optimale Versorgung der Desorptionseinheit 4 mit Wärmeenergie entweder aus der erneuerbaren Energiequelle 5 oder aus der Kraftwerksanlage oder auch in Kombination zueinander ist eine hier nicht dargestellte Regelvorrichtung vorgesehen.

## Patentansprüche

1. Fossilbefeuerte Kraftwerksanlage (1) mit einer einer Verbrennungsvorrichtung nachgeschalteten und von einem kohlendioxidhaltigen Abgas durchströmbaren Abscheidevorrichtung (2) für Kohlendioxid, wobei die Abscheidevorrichtung (2) eine Absorptionseinheit (3) und eine Desorptionseinheit (4) aufweist, **dadurch gekennzeichnet, dass** die Desorptionseinheit (4) mit einer erneuerbaren Energiequelle (5) verbunden ist.

2. Fossilbefeuerte Kraftwerksanlage (1) nach Anspruch 1, **dadurch gekennzeichnet, dass** die erneuerbare Energiequelle (5) eine Solar-Thermie-Anlage ist, und ein Solarfeld (7) umfasst.

3. Fossilbefeuerte Kraftwerksanlage (1) nach Anspruch 1, **dadurch gekennzeichnet, dass** die erneuerbare Energiequelle (5) Geo-Thermie-Anlage ist.

4. Fossilbefeuerte Kraftwerksanlage (1) nach Anspruch 1, **dadurch gekennzeichnet, dass** die erneuerbare Energiequelle (5) eine Biogas- und/oder Biomasseverbrennungsanlage ist.

5. Fossilbefeuerte Kraftwerksanlage (1) nach einem der Ansprüche 1 bis 4, **dadurch gekennzeichnet, dass** zwischen die Desorptionseinheit (4) und die erneuerbare Energiequelle (5) ein Wärmespeicher (16) geschaltet ist.

6. Fossilbefeuerte Kraftwerksanlage (1) nach einem der Ansprüche 1 bis 5, **dadurch gekennzeichnet, dass** die Desorptionseinheit (4) mit wenigstens einem weiteren Wärmeaustauscher (18) verbunden ist, der an die Dampfturbineneinheit der fossilbefeuerten Kraftwerksanlage (1) angeschlossen ist, so dass der Desorptionseinheit (4) bei unzureichender Wärmeenergieversorgung durch die erneuerbare Energiequelle (5), Wärmeenergie aus der Dampfturbineneinheit zuregelbar ist.

7. Fossilbefeuerte Kraftwerksanlage (1) nach einem der Ansprüche 1 bis 6, **dadurch gekennzeichnet, dass** in den Waschmittelkreislauf der Abscheidevorrichtung (2) für Kohlendioxid Absorptionsmittelspeicher geschaltet sind.

8. Verfahren zum Abtrennen von Kohlendioxid aus einem Abgas einer fossilbefeuerten Kraftwerksanlage, bestehend aus einem Absorptionsprozess und einem Desorptionsprozess, bei dem die für den Desorptionsprozess erforderliche Wärmeenergie mittels erneuerbarer Energien bereitgestellt wird.

9. Verfahren nach Anspruch 8, bei dem die Wärmeenergie für den Desorptionsprozess solar-thermisch erzeugt wird.

10. Verfahren nach Anspruch 8, bei dem die Wärmeenergie für den Desorptionsprozess geo-thermisch erzeugt wird.

11. Verfahren nach Anspruch 8, bei dem die Wärmeenergie für den Desorptionsprozess durch Verbrennung von Biogas- und/oder Biomasse erzeugt wird.

12. Verfahren nach einem der Ansprüche 8 bis 11, bei dem die erneuerbar erzeugte Wärmeenergie vor der Bereitstellung im Desorptionsprozess zwischengespeichert wird.

13. Verfahren nach einem der Ansprüche 8 bis 12, bei dem eine vollständige oder teilweise Unterversorgung des Desorptionsprozesses von erneuerbarer Wärmeenergie durch einen Regelprozess ausgeglichen wird, indem die Unterversorgung durch Dampf aus dem Dampfturbinenprozess der fossilbefeuerten Kraftwerksanlage bereitgestellt wird.
